# EUROPÄISCHE PATENTSCHRIFT

(11) **EP 3 177 406 B1**
(45) Veröffentlichungstag und Bekanntmachung des Hinweises auf die Patenterteilung: **18.12.2019**
(21) Anmeldenummer: 15730758.8
(22) Anmeldetag: 18.06.2015
(51) Int. Cl.: B05B 7/14, B65G 53/28

(54) **PULVERABGABEVORRICHTUNG UND PULVERBESCHICHTUNGSANLAGE ZUM PULVERSPRÜHBESCHICHTEN VON GEGENSTÄNDEN**
POWDER-DISPENSING DEVICE AND POWDER-COATING INSTALLATION FOR SPRAYING ARTICLES WITH A POWDER COATING
DISPOSITIF DE DISTRIBUTION DE POUDRE ET INSTALLATION DE DISTRIBUTION DE POUDRE POUR REVÊTIR DES OBJETS DE POUDRE

(30) Priorität: 04.08.2014 DE 102014215338
(43) Veröffentlichungstag der Anmeldung: 14.06.2017
(73) Patentinhaber: Gema Switzerland GmbH, 9015 St. Gallen (CH)
(72) Erfinder: MAUCHLE, Felix, CH-9030 Abtwil (CH)
(74) Vertreter: Trinks, Ole
(86) Internationale Anmeldenummer: PCT/EP2015/063720
(87) Internationale Veröffentlichungsnummer: WO 2016/020096

(56) Entgegenhaltungen:
- WO-A1-2012/112436

## Beschreibung

Die vorliegende Erfindung betrifft eine Pulverabgabevorrichtung gemäß dem Oberbegriff des unabhängigen Patentanspruchs 1.

Demgemäß betrifft die vorliegende Erfindung insbesondere eine Pulverabgabevorrichtung in Gestalt einer Pulverdichtstrompumpe oder eines Pulverinjektors zum Fördern von Beschichtungspulver von einem Pulverreservoir zu einer Pulversprühvorrichtung. Die Erfindung betrifft insbesondere sowohl solche Pulverabgabevorrichtungen und Pulversprühbeschichtungsvorrichtungen, welche einen Injektor als Pulverpumpe enthalten, als auch solche, welche eine Pulverdichtstrompumpe (engl.: dense phase powder pump) enthalten.

Pulverdichtstrompumpen im Sinne dieser Offenbarung weisen mindestens eine Förderkammer auf, welche mit einem Pulvereinlassventil und einem Pulverauslassventil versehen ist. Die Förderkammer ist alternativ während einer Saugphase mit einer Vakuumquelle oder während einer Abgabephase mit einer Transportdruckluftquelle verbindbar. Mittels des Vakuums der Vakuumquelle wird Pulver durch das offene Pulvereinlassventil in die Förderkammer eingesaugt, während das Pulverauslassventil geschlossen ist. Mittels der Transportdruckluft der Transportdruckluftquelle wird das in der Förderkammer befindliche Pulver durch das offene Pulverauslassventil abgegeben, während das Pulvereinlassventil geschlossen ist.

Gemäß einem Aspekt der vorliegenden Erfindung ist die erfindungsgemäße Pulverabgabeeinrichtung als eine Ein-Kammer-Pulverdichtstrompumpe ausgeführt, bei welcher die Pulverdichtstrompumpe zur Förderung des Beschichtungspulvers nur eine einzige Pulverförderkammer aufweist.

Gemäß einem weiteren Aspekt der Erfindung hingegen wird eine Pulverdichtstrompumpe angegeben, bei der mindestens zwei parallel geschaltete Förderkammern zum Einsatz kommen. Bei der Verwendung von mindestens zwei parallel geschalteten Förderkammern wird jeweils in eine der mindestens zwei Förderkammern Pulver eingesaugt, während aus der anderen der mindestens zwei Förderkammern Pulver abgegeben wird, wonach dann aus der einen Förderkammer das Pulver abgegeben und neues Pulver in die andere Kammer eingesaugt wird. Bei Parallelschaltung von zwei oder mehr Förderkammern kann in einer Pulverabgabeleitung, welche an die Pulverauslassventile von allen Förderkammern angeschlossen ist, eine kontinuierliche Pulverströmung erzeugt werden, insbesondere ohne dass Zusatz-Transportdruckluft gegenphasig zur Pulverabgabe in den Pulverweg nach der Förderkammer eingespeist werden muss.

Verschiedene Arten von Pulverabgabevorrichtungen, welche als Pulverdichtstrompumpe ausgeführt sind, sind beispielsweise aus folgenden Schriften bekannt: JP 09/071325 A, DE 196 11 533 B4, EP 1 644 131 A2, WO 2004/087331 A1, WO 2012/112436 A1 und EP 1 566 352 A2.

Diese aus dem Stand der Technik bekannten Pulverdichtstrompumpen haben mindestens eine, meistens zwei Förderkammern. Ein Vakuumeinlass der Förderkammer, bei einigen Ausführungsformen auch ein Drucklufteinlass der Förderkammer, ist mit einem Filter versehen, welcher für Luft durchlässig, jedoch für Beschichtungspulver undurchlässig ist. Als Filtermaterial ist es üblich, Sintermaterial verwenden. Das Pulvereinlassventil und das Pulverauslassventil sind meistens Quetschventile (engl.: pinch valves), welche sich bereits in Kombination den Injektor-Pumpen bei der Pulverdünnstromförderung bewährt haben, weil sie weniger anfällig sind für Pulverablagerungen in ihnen und weil sie durch den durch sie hindurchströmenden Gasstrom, normalerweise Druckluftstrom, besser reinigbar sind als andere Ventilarten.

Die von einer Pulverdichtstrompumpe pro Zeiteinheit geförderte Pulvermenge ist insbesondere abhängig von der Größe (Volumen) der Förderkammer, von der Frequenz, mit welcher Beschichtungspulver in die Förderkammer eingesaugt und dann wieder abgegeben wird, von der Stärke des Vakuums der Öffnungszeitdauer des Pulvereinlassventils während der Saugphase und von den Strömungswiderständen in den Pulverleitungen stromaufwärts und insbesondere stromabwärts der Pulverdichtstrompumpe. Die Strömungswiderstände sind insbesondere von der Länge und dem Innenquerschnitt der Pulverzufuhrleitungen, meistens Pulverschläuche, abhängig. Die Transportdruckluft vermischt sich nur wenig mit dem Beschichtungspulver und schiebt das Beschichtungspulver vor sich her aus der Förderkammer durch das Pulverauslassventil.

Eine andere Art von Pumpen, welche ebenfalls die Erfindung betreffen, sind Injektoren bzw. Injektor-Pumpen, mittels welcher Beschichtungspulver in einem Förderluftstrom eingesaugt, und dann, vermischt mit dem Förderluftstrom, durch eine Abgabeleitung (Pulverzufuhrleitung) zu einer Pulversprühvorrichtung gefördert wird. Eine solche Pulverförderung kann auch als Pulverdünnstromförderung bezeichnet werden.

Eine derartige Pulverabgabevorrichtung zur Pulverdünnstromförderung ist beispielsweise aus der Druckschrift EP 0 606 577 B1 oder aus der Druckschrift US 4,284,032 bekannt.

Im Einzelnen zeigt die Druckschrift US 4,357,900 eine Pulversprühbeschichtungsvorrichtung, bei welcher zu beschichtende Objekte durch eine Kabine transportiert und in der Kabine mittels automatischen Sprühvorrichtungen in Abhängigkeit von Sensoren beschichtet werden, wobei ein Sensor dazu dient, an eine Steuereinrichtung zu melden, wann ein zu beschichtendes Objekt in die Kabine hineintransportiert wird, damit dann die entsprechende Pulversprühvorrichtung aktiviert wird.

Im Unterschied zur Pulverdichtstromförderung sind bei der Pulverdünnstromförderung andere Verhältnisse gegeben, da hier ein Injektor als Pulverpumpe zur Förderung von Beschichtungspulver verwendet wird. In dem Injektor wird mittels eines Transportdruckluftstromes ein Unterdruck erzeugt. Mittels des Unterdruckes wird Beschichtungspulver in den Transportdruckluftstrom eingesaugt. Das Gemisch aus Transportdruckluftstrom und Pulver strömt dann vom Injektor beispielsweise zu einer an der Pulverabgabevorrichtung angeschlossenen Pulversprühvorrichtung. Die vom Injektor geförderte Pulvermenge pro Zeiteinheit ist abhängig von der pro Zeiteinheit durch den Injektor strömenden Transportdruckluftmenge.

Durch die Erfindung soll die Aufgabe gelöst werden, eine technische Lösung anzugeben, mit welcher der Sprühbeschichtungsbetrieb für den Kunden einfacher und preiswerter wird, ohne dass er auf eine gute Beschichtungsqualität und auf einen guten Beschichtungswirkungsgrad verzichten muss.

Diese Aufgabe wird durch den Gegenstand des unabhängigen Patentanspruchs 1 gelöst, wobei vorteilhafte Weiterbildungen in den abhängigen Ansprüchen angegeben sind.

Demgemäß wird eine Pulverabgabevorrichtung in Gestalt einer Pulverdichtstrompumpe oder eines Pulverinjektors vorgeschlagen, wobei die Pulverabgabevorrichtung dazu dient, Beschichtungspulver von einem Pulverreservoir oder dergleichen Pulverbehältnis zu einer Pulversprühvorrichtung zu fördern. Erfindungsgemäß ist eine Steuereinrichtung vorgesehen, welche in der Pulverabgabevorrichtung integriert ist. Diese Steuereinrichtung ist ausgebildet, um mindestens einen Parameter, der im Hinblick auf einen mit der Pulversprühvorrichtung bewirkten Sprühbeschichtungsvorgang charakterisierend ist, einzustellen.

Bei dem mindestens einen Parameter, der im Hinblick auf einen mit der Pulversprühvorrichtung bewirkten Sprühbeschichtungsvorgang charakterisierend ist, handelt es sich beispielsweise um einen Elektrodensprühstrom von einer oder mehreren Hochspannungselektroden der Pulversprühvorrichtung, eine Hochspannung an einer oder mehreren Hochspannungselektroden der Pulversprühvorrichtung, eine pro Zeiteinheit der Pulversprühvorrichtung zuzuführende Menge an Elektrodenspülluft, eine pro Zeiteinheit der Pulversprühvorrichtung zuzuführende Menge an Formungsluft, oder eine pro Zeiteinheit der Pulversprühvorrichtung zusammen mit dem Beschichtungspulver zuzuführende Menge an Transportdruckluft.

Besonders bevorzugt ist vorgesehen, dass die Steuereinrichtung mindestens ein manuell betätigbares Parameter-Einstellelement aufweist zum Einstellen eines Parameter-Sollwertes des mindestens einen Parameters, der im Hinblick auf einen mit der Pulversprühvorrichtung bewirkten Sprühbeschichtungsvorgang charakterisierend ist. In diesem Zusammenhang ist es ferner von Vorteil, wenn die Steuereinrichtung eine optische Anzeigeeinheit aufweist, mit Hilfe welcher vorzugsweise automatisch der mindestens eine eingestellte Parameter-Sollwert angezeigt wird.

Es kann in diesem Zusammenhang auch vorgesehen sein, dass die Steuereinrichtung einen Schnittstellenanschluss zum Herausführen eines Kommunikationsbusses der Steuereinrichtung aufweist. Dieser dient zum Einstellen des mindestens einen Parameters mittels einer Fernsteuerung (externe Steuerung). Alternativ oder zusätzlich dient der Kommunikationsbus zum Übermitteln des mindestens einen eingestellten Parameter-Sollwerts an eine abgesetzte Verarbeitungseinheit.

Hierdurch wird der Vorteil erzielt, dass - je nach Bedarf - auch eine Fernsteuerung der Steereinrichtung erreicht werden kann. Insbesondere ist so auch eine Steuerung im Automatikbetrieb möglich, und zwar selbst dann, wenn an der Steuerungseinrichtung selbst kein manuell betätigbares Einstellelement bzw. keine optische Anzeigeeinheit vorgesehen ist. Auch wenn diese Elemente vorhanden sind, kann so vorteilhaft sowohl ein Automatikbetrieb, als auch Betrieb mit manueller Steuerung vorgesehen werden.

Vorteilhafterweise ist der Kommunikationsbus als Feldbussystem ausgebildet. Hierbei können insbesondere signaltechnisch robuste und standardisierte Feldbussysteme wie z. B. CAN-Bus oder Profibus zum Einsatz kommen, um eine einfache Einbindung in vorhandene Automatisierungssysteme zu ermöglichen.

Der erfindungsgemäßen Pulverabgabevorrichtung (Pulverdichtstrompumpe oder Pulverinjektor) kommt - im Unterschied zu herkömmlichen aus dem Stand der Technik bekannten Pulverabgabevorrichtungen - somit eine Doppelfunktion zu:
Zum einen dient die Pulverabgabevorrichtung zum Fördern von Beschichtungspulver von einem Pulverreservoir zu einer mit der Pulverabgabevorrichtung strömungsmäßig verbundenen Pulversprühvorrichtung.

Zum anderen dient die Pulverabgabevorrichtung aber auch dazu, die mit der Pulverabgabevorrichtung strömungsmäßig verbundene Pulversprühvorrichtung geeignet anzusteuern, um das von der Pulverabgabevorrichtung der Pulversprühvorrichtung geförderte Beschichtungspulver auf den zu beschichtenden Gegenstand zu versprühen. Mit anderen Worten, durch die erfindungsgemäße Lösung wird insbesondere der Vorteil erzielt, dass auf separat ausgeführte elektronische Steuergeräte verzichtet werden kann, so dass die gesamte Pulverbeschichtungsanlage kompakter und übersichtlicher gestaltet werden kann. Durch die Integration der Steuereinrichtung in der Pulverabgabevorrichtung entfällt auch die sonst übliche aufwendige Verkabelung bzw. das Anschließen von Druckluftleitungen, da dies vorzugsweise direkt an dem Druckluftanschluss der Pulverabgabevorrichtung erfolgen kann.

Die in der Pulverabgabevorrichtung integrierte Steuereinrichtung dient nicht nur zum Ansteuern einer an die Pulverabgabevorrichtung angeschlossenen Pulversprühvorrichtung, sondern auch um die Parameter einzustellen, die im Hinblick auf eine mit der Pulverabgabevorrichtung bewirkte Pulverförderung charakterisierend sind. Hierbei handelt es sich insbesondere um eine pro Zeiteinheit von der Pulverabgabevorrichtung zu fördernde Menge an Beschichtungspulver, und um eine pro Zeiteinheit mit dem Beschichtungspulver zu fördernde Menge an Transportdruckluft.

Die erfindungsgemäße Pulverabgabevorrichtung eignet sich für automatische Sprühvorrichtungen (Automatikpistolen) und für manuelle Sprühvorrichtungen (Handpistolen). Insbesondere bei manuellen Sprühvorrichtungen sind jedoch die Beschichtungsqualität und der Wirkungsgrad sehr stark von der Erfahrung von der Bedienungsperson abhängig. Von daher ist gemäß einer Weiterbildung der erfindungsgemäßen Lösung vorgesehen, dass die Steuereinrichtung ausgebildet ist zur Durchführung von Sprühbeschichtungsverfahren, wobei hierzu die Steuereinrichtung eine Speichereinrichtung mit einer Vielzahl von Sprühbeschichtungsprogrammen aufweist, und zwar nicht nur mit variablen Parametern, sondern auch mit unveränderbaren Parametern. Die unveränderbaren Parameter sind insbesondere solche, welche für die Beschichtungsqualität und/oder den Wirkungsgrad besonders kritisch sind und viel Erfahrung für eine genaue Einstellung der Parameter erfordern, beispielsweise die Hochspannung von Hochspannungselektroden zur elektrostatischen Aufladung des Beschichtungsmaterials und vorzugsweise auch der Elektrodenstrom. Die unveränderbaren Parameter sind auf Parameterwerte eingestellt, welche sich in der Praxis besonders vorteilhaft erwiesen haben.

Gemäß einem weiteren Aspekt betrifft die vorliegende Erfindung ferner eine Pulverbeschichtungsanlage zum Pulversprühbeschichten von Gegenständen, wobei die Pulverbeschichtungsanlage eine Pulverabgabevorrichtung der zuvor genannten Art und mindestens eine mit der Pulverabgabeeinrichtung über eine Pulverzufuhrleitung verbundene Pulversprühvorrichtung aufweist. Die erfindungsgemäße Pulverbeschichtungsanlage zeichnet sich dadurch aus, dass alle im Hinblick auf die Funktionsweise der mindestens einen Pulversprühvorrichtung einstellbaren Parameter über die Steuereinrichtung der Pulverabgabevorrichtung einstellbar sind. Von daher handelt es sich um eine besonders kompakt ausgeführte Anlage, mit welcher der Sprühbeschichtungsbetrieb für den Kunden einfacher und preiswerter wird, ohne dass er auf eine gute Beschichtungsqualität und auf einen guten Beschichtungswirkungsgrad verzichten muss.

Nachfolgend wird die Erfindung unter Bezugnahme auf die beiliegenden Zeichnungen anhand eines exemplarischen Ausführungsbeispiels der erfindungsgemäßen Lösung näher beschrieben.

Es zeigen:
- FIG. 1: eine perspektivische Ansicht auf eine exemplarische Ausführungsform der erfindungsgemäßen Pulverabgabevorrichtung; und
- FIG. 2: schematisch eine Pulverbeschichtungsanlage zum Pulversprühbeschichten von Gegenständen, wobei die Pulverbeschichtungsanlage die in FIG. 1 gezeigte exemplarische Ausführungsform der erfindungsgemäßen Pulverabgabevorrichtung aufweist.

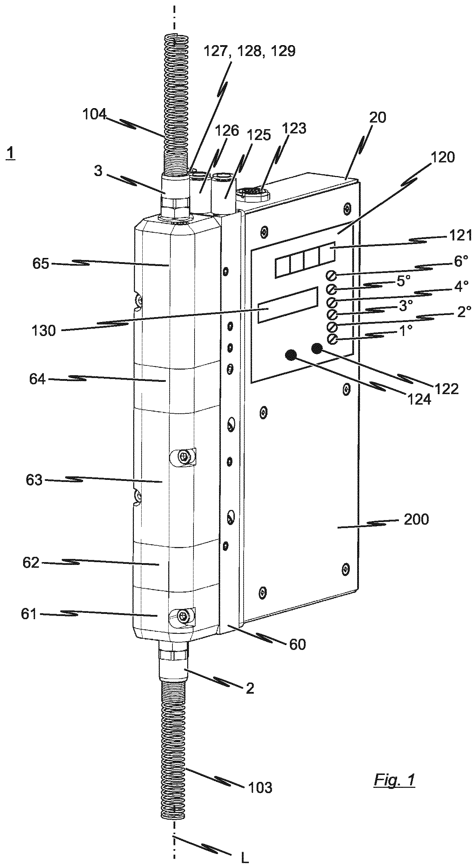

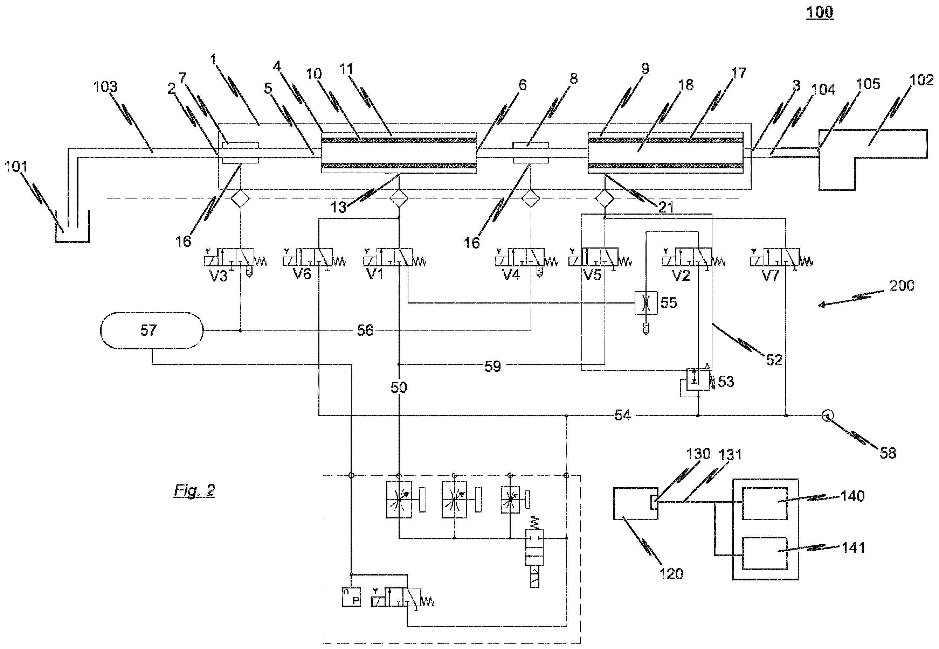

Nachfolgend wird unter Bezugnahme auf die Darstellungen in den Figuren 1 und 2 eine exemplarische Ausführungsform der erfindungsgemäßen Pulverabgabevorrichtung 1 sowie schematisch eine Pulverbeschichtungsanlage 100 mit solch einer Pulverabgabevorrichtung 1 beschrieben.

Obgleich es selbstverständlich auch denkbar ist, die Pulverabgabevorrichtung 1 als Pulverdünnstrompumpe auszuführen, ist bei den in den Zeichnungen dargestellten exemplarischen Ausführungsformen die Pulverabgabevorrichtung 1 als Pulverdichtstrompumpe ausgebildet, die in einer Pulverbeschichtungsanlage 100 dazu dient, Beschichtungspulver von einem Pulverreservoir 101 zu einer stromabwärts von der Pulverdichtstrompumpe 1 angeordneten Pulversprühbeschichtungspistole bzw. Pulversprühvorrichtung 102 zu fördern. Anstelle der Pulversprühbeschichtungspistole 102 kann auch eine andere Einrichtung zum Versprühen von Beschichtungspulver auf ein zu beschichtendes Objekt zum Einsatz kommen.

Wie in FIG. 2 schematisch dargestellt, weist die dort zum Einsatz kommende exemplarische Ausführungsform der erfindungsgemäßen Pulverabgabevorrichtung 1 einen Pulvereinlass 2 auf, der mit Hilfe einer Pulverleitung 103, insbesondere mit Hilfe eines Ansaugrohres oder dergleichen, strömungsmäßig mit dem Pulverreservoir 101 verbunden oder verbindbar ist. Am entgegengesetzten Endbereich der Pulverabgabevorrichtung 1 ist ein Pulverauslass 3 vorgesehen, welcher mit Hilfe einer Pulverleitung 104, insbesondere mit Hilfe eines Pulverschlauches, mit einem Beschichtungspulvereinlass 105 der Pulversprühbeschichtungspistole 102 verbunden bzw. verbindbar ist.

Im Einzelnen sind bei der exemplarischen Ausführungsform sowohl der Pulvereinlass 2 als auch der Pulverauslass 3 der Pulverabgabevorrichtung 1 jeweils als Schlauchanschlussstutzen ausgebildet, an den die entsprechende Pulverleitung 103 bzw. 104 aufsteckbar und mit einer Schlauchklemme fixierbar ist. Selbstverständlich kommen aber auch andere Ausführungsformen für den Pulvereinlass 2 bzw. den Pulverauslass 3 in Frage.

Die Pulverabgabevorrichtung 1 gemäß der dargestellten Ausführungsform ist als Ein-Kammer-Pulverdichtstrompumpe ausgebildet, wobei zur Förderung von Beschichtungspulver von dem Pulverreservoir 101 zu der Pulversprühbeschichtungspistole 102 bzw. zu einer anderen Pulversprühvorrichtung zur Sprühbeschichtung von Gegenständen nur eine einzige Pulverförderkammer 4 vorgesehen ist. Die (einzige) Pulverförderkammer 4 weist an einem ersten Endbereich einen Pulvereinlass 5 auf, welcher in Richtung des Pulvereinlasses 2 der Pulverabgabevorrichtung 1 zeigt. Ferner weist die Pulverförderkammer 4 einen in Richtung des Pulverauslasses 3 der Pulverabgabevorrichtung 1 zeigenden Pulverauslass 6 auf. Am Pulvereinlass 5 der Pulverförderkammer 4 ist unmittelbar angrenzend ein Pulvereinlassventil 7 angeordnet, und zwar derart, dass dieses Pulvereinlassventil 7 zwischen dem Pulvereinlass 5 der Pulverförderkammer 4 und dem Pulvereinlass 2 der Pulverabgabevorrichtung 1 liegt. In gleicher Weise ist unmittelbar angrenzend an den Pulverauslass 6 der Pulverförderkammer 4 ein Pulverauslassventil 8 angeordnet.

Im Unterschied zu dem Pulvereinlassbereich der Pulverabgabevorrichtung 1 ist am Pulverauslassbereich der Pulverabgabevorrichtung 1 das Pulverauslassventil 8 jedoch nicht unmittelbar zwischen dem Pulverauslass 6 der Pulverförderkammer und dem Pulverauslass 3 der Pulverabgabevorrichtung 1 angeordnet; vielmehr ist zwischen dem Pulverauslassventil 8 und dem Pulverauslass 3 der Pulverabgabevorrichtung 1 noch eine Zusatzdruckluft-Einlassvorrichtung 9 angeordnet. Wie es anschließend näher beschrieben wird, dient diese Zusatzdruckluft-Einlassvorrichtung 9 zum bedarfsweisen Einspeisen von zusätzlicher Transportdruckluft in den Pulverweg zwischen dem Pulverauslassventil 8 und dem Pulverauslass 3 der Pulverabgabevorrichtung 1.

An dieser Stelle ist darauf hinzuweisen, dass es nicht zwingend erforderlich ist, die Zusatzdruckluft-Einlassvorrichtung 9 zwischen dem Pulverauslassventil 8 und dem Pulverauslass 3 der Pulverabgabevorrichtung 1 anzuordnen. Die mit der Zusatzdruckluft-Einlassvorrichtung 9 erzielbaren Effekte, die nachfolgend näher beschrieben werden, lassen sich auch dann realisieren, wenn die Zusatzdruckluft-Einlassvorrichtung 9 hinter dem Pulverauslass 3 der Pulverabgabevorrichtung 1 angeordnet ist.

Wie es insbesondere der Darstellung in FIG. 1 entnommen werden kann, liegen der Pulvereinlass 2 der Pulverabgabevorrichtung 1, das Pulvereinlassventil 7, der Pulvereinlass 5 der Pulverförderkammer 4, die Pulverförderkammer 4, der Pulverauslass 6 der Pulverförderkammer 4, die Zusatzdruckluft-Einlassvorrichtung 9 sowie der Pulverauslass 3 der Pulverabgabevorrichtung 1 entlang einer gemeinsamen Längsachse L. Mit anderen Worten, der Pulvereinlass 2 der Pulverabgabevorrichtung 1 ist am entgegen gesetzten Ende des Pulverauslasses 3 der Pulverabgabevorrichtung 1 vorgesehen.

Ausweislich der schematischen Darstellung in FIG. 2 ist die Pulverförderkammer 4 zwischen ihrem Pulvereinlass 5 und ihren Pulverauslass 6 durch die zylindrische Wand eines rohrartigen Filters 10 gebildet, welche für Luft, jedoch nicht für Beschichtungspulver durchlässig ist und beispielsweise aus Sintermaterial bestehen kann. Der als Filterrohr ausgebildete Filter 10 ist von einer Zwischenkammer 11 umgeben, die auf ihrer Außenseite von einem Gehäuse der Pulverförderkammer 4 begrenzt ist.

Durch das Gehäuse mündet eine Luftaustauschöffnung 13, welche strömungsmäßig an ein Steuerventil V1 angeschlossen ist. Über das Steuerventil V1 ist die Pulverförderkammer 4 wechselweise mit Transportdruckluft aus einer Druckluftversorgungsleitung 50 versorgbar oder mit Vakuum bzw. Unterdruck einer Vakuumquelle 52 beaufschlagbar.

Bei der in FIG. 2 schematisch dargestellten Ausführungsformen weist die Vakuumquelle 52 einen Injektor 55 auf, welchem Injektordruckluft von einer Druckluftversorgungsleitung 54 bzw. einer Druckluftquelle 58 , beispielsweise über einen Druckregler 53 und ein weiteres Steuerventil V2, zugeführt werden.

Um während einer Saugphase der Pulverabgabevorrichtung 1 über den Pulvereinlass 2 der Pulverabgabevorrichtung 1 aus dem Pulverreservoir 101 Beschichtungspulver in die Pulverförderkammer 4 einsaugen zu können, wird das am Pulverauslass 6 der Pulverförderkammer 4 angeordnete Pulverauslassventil 8 geschlossen und das zwischen dem Pulvereinlass 2 der Pulverabgabevorrichtung 1 und dem Pulvereinlass 5 der Pulverförderkammer 4 angeordnete Pulvereinlassventil 7 geöffnet. Gleichzeitig mit dem Betätigen des Pulverauslassventils 8 und des Pulvereinlassventils 7 oder unmittelbar anschließend daran wird über das Steuerventil V1 und der damit verbundenen Luftaustauschöffnung 13 die Pulverförderkammer 4 mit der Vakuumquelle 52 verbunden, so dass in der Pulverförderkammer 4 ein Unterdruck anliegt und Beschichtungspulver aus dem ersten Pulverreservoir 101 eingesaugt werden kann.

Nach dem Einsaugen von Beschichtungspulver in die Pulverförderkammer 4 erfolgt ein Wechsel von der Saugphase zu der Ausstoßphase von Beschichtungspulver aus der Förderkammer 4. Hierzu wird das Pulvereinlassventil 7 geschlossen und das Pulverauslassventil 8 geöffnet, während das Steuerventil V1 eine strömungsmäßige Verbindung der Luftaustauschöffnung 13 mit der Druckluftversorgungsleitung 50 bereitstellt, so dass die während der Saugphase in die Pulverförderkammer 4 zuvor eingesaugte Beschichtungspulverportion mittels der über die Luftaustauschöffnung 13 zugeführten Transportdruckluft durch das offene Pulverauslassventil 8 ausgestoßen wird.

Anschließend erfolgt wieder die Betriebsphase des Einsaugens von Beschichtungspulver über den Pulvereinlass 2 der Pulverabgabevorrichtung 1 und über das geöffnete Pulvereinlassventil 7. Dieser Wechsel der Betriebsphasen wiederholt sich ständig.

Hierin wird unter dem Begriff "Pumpenzyklus" ein Zyklus bestehend aus einer Saugphase und einer Ausstoßphase verstanden.

Die eingangs- und ausgangsseitig der Pulverförderkammer 4 angeordneten Ventile (Pulvereinlassventil 7, Pulverauslassventil 8) sind vorzugsweise jeweils als Quetschventil ausgebildet, wobei allerdings auch andere Ventiltypen grundsätzlich in Frage kommen.

Die bei der in den Zeichnungen dargestellten exemplarischen Ausführungsform jeweils als Quetschventil ausgebildeten Pulvereinlass- und Pulverauslassventile 7, 8 weisen jeweils einen flexiblen elastischen Schlauch auf, der als Ventilkanal dient. Der flexible elastische Schlauch ist zum Schließen des entsprechenden Ventils (Pulvereinlassventil 7, Pulverauslassventil 8) mittels Betätigungsdruckluft in einer den flexiblen elastischen Schlauch umgebenen Druckkammer zusammenquetschbar.

Zu diesem Zweck ist in jeder Druckkammer jeweils eine Luftaustauschöffnung 16 vorgesehen, die an ein entsprechendes Steuerventil V3, V4 angeschlossen ist. Die Steuerventile V3, V4 dienen dazu, wechselweise die Druckkammern der beiden jeweils als Quetschventil ausgebildeten Pulvereinlass- bzw. Pulverauslassventile 7, 8 mit Überdruck aus einer Druckluftversorgungsleitung 56 zu beaufschlagen.

Wie dargestellt, ist die Druckluftversorgungsleitung 56 mit einem Druckspeicher 57 verbunden, wobei der Druckspeicher 57 seinerseits mit einer Druckluftquelle 58 verbunden ist. Selbstverständlich ist es aber auch denkbar, dass die Druckluftversorgungsleitung 56 direkt mit der Druckluftquelle 58 (d.h. ohne Zwischenschaltung eines Druckspeichers 57) verbunden ist.

Der flexible elastische Schlauch des als Quetschventil ausgebildeten Pulvereinlassventils 7 bzw. Pulverauslassventils 8 hat vorzugsweise eine solche Elastizität oder Eigenspannung, dass er sich nach Wegfall des Drucks der Betätigungsdruckluft in der Druckkammer selbsttätig wieder streckt und dadurch den entsprechenden Ventilkanal öffnet. Um das Öffnen der Quetschventile zu unterstützen und somit die realisierbare Schaltfrequenz der Pulverabgabevorrichtung 1 zu erhöhen, ist es denkbar, dass über die entsprechenden Luftaustauschöffnungen 16 ein Unterdruck angelegt wird.

Um bei der in den Zeichnungen gezeigten und als Ein-Kammer-Pulverdichtstrompumpe ausgeführten Pulverabgabevorrichtung 1 stromabwärts des Pulverauslasses 3 der Pulverabgabevorrichtung 1 einen homogenen Pulverstrom ohne störende Pulsationen zu erreichen, sind verschiedene Maßnahmen vorgesehen.

Beispielsweise ist die Pulverabgabevorrichtung 1 strukturell derart konstruiert und aufgebaut, dass die mit der Pulverabgabevorrichtung 1 erzielbare Pumpfrequenz im Vergleich zu der bei herkömmlichen Mehr-Kammer-Pulverdichtstrompumpen erreichbaren Pumpfrequenz erhöht werden kann. Zu diesem Zweck kommt bei der erfindungsgemäßen Lösung ein Materialblock 60 (vgl. FIG. 1) zum Einsatz, an welchem bei vorteilhaften Realisierungen der erfindungsgemäßen Pulverabgabevorrichtung 1 das zur Förderung von Beschichtungspulver erforderliche Pulvereinlassventil 7 sowie das ebenfalls zur Förderung von Beschichtungspulver erforderliche Pulverauslassventil 8 einschließlich der zur Betätigung dieser Ventile 7, 8 erforderlichen Steuerventile V3, V4 befestigt sein können (in den Zeichnungen nicht explizit gezeigt). Sowohl das Pulvereinlassventil 7 als auch das Pulverauslassventil 8 und die zur Betätigung hierfür erforderlichen Steuerventile V3, V4 sind vorzugsweise an Kanälen angeschlossen, die in dem Materialblock 60 ausgebildet sind (nicht in den Figuren dargestellt). Das gleiche gilt auch für das Steuerventil V1, welches über mindestens einen in dem Materialblock 60 ausgebildeten Kanal strömungsmäßig mit der Luftaustauschöffnung 13 der Pulverförderkammer 4 verbunden ist.

Dadurch, dass die entsprechenden Steuerventile V1, V3 und V4 sowie das Pulvereinlass- und Pulverauslassventil 7, 8 möglichst dicht an den zu schaltenden Komponenten der Pulverabgabevorrichtung 1 angeordnet sind, wird vermieden, dass in den entsprechenden Druckleitungen zu den pneumatisch zu betätigenden Ventilen 7, 8 bzw. in der entsprechenden Druckleitung zu der Luftaustauschöffnung 13 der Pulverförderkammer 4 große Volumina vorliegen, welche beim wechselweisen Betrieb der Pulverabgabevorrichtung 1 wahlweise evakuiert oder mit Druckluft gefüllt werden müssen. Dadurch kann verhindert werden, dass übermäßige Reaktions-Verzögerungszeiten auftreten, was letztendlich auch die Frequenz begrenzen würde, mit welcher die Pulverabgabevorrichtung 1 Beschichtungspulver fördern kann.

Wie es insbesondere der Darstellung in FIG. 1 entnommen werden kann, weist die Pulverabgabevorrichtung 1 in vorteilhafter Weise einen modularen Aufbau auf, bei welchem die Komponenten "Pulvereinlass 2 der Pulverabgabevorrichtung 1", "Pulvereinlassventil 7", "Pulverförderkammer 4", "Pulverauslassventil 8" und "Zusatzdruckluft-Einlassvorrichtung 9" zusammen mit "Pulverauslass 3 der Pulverabgabevorrichtung 1" jeweils als modulares Bauteil ausgebildet sind. Das Modul, welches den Pulvereinlass 2 der Pulverabgabevorrichtung 1 bildet, ist in den Zeichnungen mit der Bezugsziffer "61" bezeichnet, während das stromabwärts hiervon angeordnete Modul 62 das Pulvereinlassventil 7 begründet. Die Module 63 und 64 bilden die Pulverförderkammer 4 und das Pulverauslassventil 8, während das Modul 65 die Kombination aus der Zusatzdruckluft-Einlassvorrichtung 9 und dem Pulverauslass 3 der Pulverabgabevorrichtung 1 bildet. Die einzelnen Module 61, 62, 63, 64 und 65 sind axial mit Bezug auf die gemeinsame Längsachse L ausgerichtet und hintereinander auf dem Materialblock 60 montiert.

Der modulare Aufbau der Pulverabgabevorrichtung 1 vereinfacht die Wartung der Pumpe erheblich, da im Bedarfsfall, beispielsweise bei einem Defekt oder zum Zwecke der Wartung und/oder Reinigung, die einzelnen Module 61, 62, 63, 64 und 65 der Pumpe mit den entsprechenden Komponenten besonders leicht und insbesondere schnell ausgetauscht werden können.

Bei exemplarischen Ausführungsform der erfindungsgemäßen Pulverabgabevorrichtung 1 ist zur Reduzierung bzw. Vermeidung von Pulsationen stromabwärts des Pulverauslasses 3 der Pulverabgabevorrichtung 1 insbesondere die bereits erwähnte Zusatzdruckluft-Einlassvorrichtung 9 vorgesehen, welche am Ausgang des Pulverauslassventils 8 bzw. am Pulverauslass 3 der Pulverabgabevorrichtung 1 vorgesehen ist, um dort bedarfsweise Zusatz-Transportdruckluft in den Pulverweg einspeisen zu können.

Gemäß einer exemplarischen Realisierungen der Zusatzdruckluft-Einlassvorrichtung 9 weist diese ein Filterrohr 17 auf, welches einen Umfang von mindestens 180° (bei den dargestellten Ausführungsformen einen Umfang von 360°) hat und zumindest auf einer Teillänge des entsprechenden Pulverweges eine Kanalwandinnenfläche auf mindestens 180° (bei den in den Zeichnungen dargestellten Ausführungsformen eine Kanalwandinnenfläche auf 360°) des Pulverwegumfanges bildet.

Eine gemäß der Darstellung in FIG. 2 als Druckluftringkammer ausgebildete Druckluftkammer umgibt das Filterrohr 17 auf seinem Außenumfang. Die hier als Druckluftringkammer ausgebildete Druckluftkammer wird an ihrem radial inneren Umfang von dem Filterrohr 17 und mit Abstand von dem Filterrohr 17 an ihrem radial äußeren Umfang von einem Gehäuse umgeben. In dem Gehäuse ist eine Luftaustauschöffnung 21 eingebracht, über welche bedarfsweise Druckluft von einer Druckluftleitung 59 über ein Steuerventil V5 in die Druckluftkammer und von dort durch das Filterrohr 17 in den Filterrohrkanal 18 strömen kann.

Die in den Pulverweg eingespeiste Transportdruckluftmenge pro Zeiteinheit kann so gering gehalten werden, dass sie keinen oder nur einen geringen Einfluss auf die Strömungsgeschwindigkeit des Beschichtungspulvers im Strömungsweg hat. Zusätzlich besteht die Möglichkeit, durch Erhöhung des Druckes der mit Hilfe der Zusatzdruckluft-Einlassvorrichtung 9 zusätzlich eingespeisten Transportdruckluft die Strömungsmenge zu erhöhen, um die Strömungsgeschwindigkeit des Beschichtungspulvers zu beeinflussen.

Gemäß einer weiteren vorteilhaften Ausführungsform, ist die Pulsfrequenz der der Zusatzdruckluft-Einlassvorrichtung 9 zugeführten Zusatzdruckluft in Abhängigkeit von der Pulverabgabefrequenz der Pulverförderkammer 4 nach mindestens einer der folgenden Arten einstellbar: beispielsweise manuell einstellbar ist und/oder vorzugsweise automatisch steuerbar oder vorzugsweise regelbar ist. In vorteilhafter Weise kann dadurch die Zusatzdruckluft-Pulsfrequenz mit zunehmender Pulverabgabefrequenz erhöht und mit abnehmender Pulverabgabefrequenz reduziert werden.

Die erfindungsgemäße Pulverabgabevorrichtung 1 weist eine integrierte Steuereinrichtung 120 auf, die - wie in FIG. 1 gezeigt - mit dem Gehäuse 20 der Pulverabgabevorrichtung 1 eine Baueinheit bildet. Die Steuereinrichtung 120 dient zur Steuerung der ansteuerbaren Komponenten der Pulverabgabevorrichtung 1 einerseits und zur Steuerung der ansteuerbaren Komponenten einer mit der Pulverabgabevorrichtung 1 verbundenen Pulversprühvorrichtung 102 andererseits.

Die Steuereinrichtung 120 hat mindestens eine optische Anzeigeeinheit 121, mit einem oder mehreren Anzeigefelder zur optischen Anzeige von Betriebswerten, beispielsweise Sollwerten und/oder Istwerten.

Die mit der Pulverabgabevorrichtung 1 strömungsmäßig verbundene Pulversprühvorrichtung 102 enthält vorzugsweise einen Hochspannungserzeuger, welcher gemäß anderen Ausführungsformen auch extern von der Pulversprühvorrichtung 102 angeordnet sein kann, zur Erzeugung von Hochspannung von mindestens einer Hochspannungselektrode, die im oder benachbart zum Strömungsweg des Beschichtungspulvers angeordnet ist, zur elektrostatischen Aufladung des Beschichtungspulvers.

Die Steuereinrichtung 120 enthält eine computerisierte Gerätesteuerung zum Betrieb der Pulversprühvorrichtung 102 und der Pulverabgabevorrichtung 1. Die Steuereinrichtung 120 weist einen elektrischen Energieeingang 122 (Stromanschluss, Spannungsanschluss) auf zur Versorgung der Steuereinrichtung mit elektrischer Energie.

Die Steuereinrichtung 120 ist ferner mit einem elektrischen Energieausgang 123 versehen zur Abgabe einer Niederspannung an den Hochspannungserzeuger der Pulversprühvorrichtung 102. Die Niederspannung am Niederspannungsausgang 123 wird von der Gerätesteuerung von der elektrischen Energie des Energieeingangs 122 in Abhängigkeit von der Einstellung der Hochspannung an einem Hochspannungseinstellelement 1° der Steuereinrichtung 120 erzeugt.

Das Anschlussende eines Niederspannungskabels ist an den Energieausgang 123 der Steuereinrichtung 120 anschließbar zur Zufuhr von Niederspannung an den Hochspannungserzeuger der Pulversprühvorrichtung 102.

Die Steuereinrichtung 120 enthält ferner einen an die Druckluftquelle 58 anschließbaren Drucklufteingang 124 und kann auch einen mit dem gleichen Druck beaufschlagbaren Druckluftausgang 125 aufweisen.

Die Steuereinrichtung 120 weist ein Pulvereinstellelement 2° auf, an welchem die Sollwerte der Pulverströmungsmenge pro Zeiteinheit eingestellt werden können, die der Pulversprühvorrichtung 102 von der Pulverabgabevorrichtung 1 zugeführt werden soll.

An einem Transportdruckluftausgang 126 der Steuereinrichtung 120 kann Transportdruckluft abgenommen werden in Abhängigkeit von dem am Pulvereinstellelement 2° einstellbaren Sollwert der Pulverströmungsmenge pro Zeiteinheit. Die Steuereinrichtung 120 berechnet in Abhängigkeit von dem am Pulvereinstellelement 2° eingestellten Sollwert der Pulverströmungsmenge pro Zeiteinheit den Sollwert für die dafür erforderliche Transportdruckluftströmungsmenge pro Zeiteinheit für die Pulversprühvorrichtung 102.

Gemäß einer bevorzugten Ausführungsform der Erfindung berechnet die Steuereinrichtung 120 in Abhängigkeit von dem am Pulvereinstellelement 2° eingestellten Sollwert auch die Pumpfrequenz der Pulverabgabevorrichtung 1.

Wenn die Pulversprühvorrichtung 102 derart ausgebildet ist, dass die Zerstäubung des Beschichtungspulvers mit Hilfe von Zerstäuberluft erfolgt, kann die Steuereinrichtung 120 mit einem Zerstäuberluftauslass 127 versehen sein, an welchen das Anschluss einer Zerstäuberluftleitung zur Zuführung von Zerstäuberdruckluft zur Pulversprühvorrichtung 102 anschließbar ist. Der Sollwert der Zerstäuberdruckluft wird von der Steuereinrichtung 120 bestimmt und ist vorzugsweise durch ein Zerstäuberlufteinstellelement 3° variabel einstellbar.

Wenn die Pulversprühvorrichtung 102 mit einem Elektrodenspülluftkanal zur Spülung der Hochspannungselektrode versehen ist, um ein Anhaften von Beschichtungspulver an der mindestens einen Elektrode zu verhindern, kann die Steuereinrichtung 120 mit einem Elektrodenspülluftauslass 128 versehen sein, welchem von der Steuereinrichtung 120 definierte Elektrodendruckluft abnehmbar ist, in dem an dem Elektrodenluftanschluss das Anschlussende einer Elektrodenspülluftleitung angeschlossen wird. Zur Einstellung der Elektrodenspülluft kann ein Elektrodenspülluft-Einstellelement 4° an der Steuereinrichtung 120 vorgesehen sein.

Wenn die Pulversprühvorrichtung 102 mit einem oder mehreren Formungsdruckluftkanälen zur Formung des Sprühstrahls mittels Formungsdruckluft versehen ist, kann auch die Steuereinrichtung 120 mit einem Formungsdruckluftauslass 129 versehen werden, an welchen das Anschlussende einer Formungsdruckluftleitung der Pulversprühvorrichtung 102 anschließbar ist. Die Formungsdruckluft wird von der Steuereinrichtung 120 definiert. Vorzugsweise ist die Steuereinrichtung 120 mit einem Formungslufteinstellelement 5° versehen zum Einstellen der Formungsdruckluft.

Vorzugsweise ist die Steuereinrichtung 120 ferner mit einem Zusatzdruckluftauslass (in den Zeichnungen nicht gezeigt) versehen, an welchem ein von der Gerätesteuerung einstellbarer Zusatzdruckluftstrom pro Zeiteinheit entnehmbar ist. Die Steuereinrichtung 120 kann mit einem Zusatzdrucklufteinstellelement 6° versehen sein zum Einstellen des Sollwerts des Zusatzdruckluftstroms pro Zeiteinheit.

Gemäß bevorzugter Ausführungsform der Erfindung ist jedoch anstelle des Zusatzdrucklufteinstellelements ein Gesamtlufteinstellelement an der Steuereinrichtung vorgesehen zum Einstellen eines Sollwerts für den Gesamtdruckluftstrom bestehend aus Transportdruckluftstrom pro Zeiteinheit und Zusatzdruckluftstrom pro Zeiteinheit. Hierfür kann die Gerätesteuerung derart ausgebildet sein, dass sie in Abhängigkeit von den Einstellungen am Pulvereinstellelement die Transportdruckluftströmungsmenge pro Zeiteinheit errechnet und am Transportdruckluftauslass zur Verfügung stellt, und in Abhängigkeit von dieser Transportdruckluftströmungsmenge pro Zeiteinheit und der Einstellung am Gesamtlufteinstellelement die Zusatzdruckluftströmungsmenge pro Zeiteinheit berechnet und am Zusatzdruckluftauslass derart einstellt, dass die Gesamtdruckluftströmungsmenge pro Zeiteinheit stets dem Sollwert entspricht, der am Gesamtlufteinstellelement eingestellt ist.

Am Zusatzdruckluftauslass der Steuereinrichtung 120 kann das Anschlussende einer Zusatzdruckluftleitung angeschlossen werden zur Zufuhr von Zusatzdruckluft in den Pulverströmungsweg an einer Stelle zwischen der Pulverabgabevorrichtung 1 und der Sprühöffnung der Pulversprühvorrichtung 102, beispielsweise und vorzugsweise am Pulvereingang am hinteren Ende der Pulversprühvorrichtung, wo die Pulverabgabeleitung an die Pulversprühvorrichtung angeschlossen ist.

Zum Betrieb der Pulverabgabevorrichtung 100 kommt eine pneumatische Schaltung 200 zum Einsatz, die ebenfalls in dem Gehäuse 20 der Pulverabgabevorrichtung 1 integriert ist, und eine Vielzahl von Steuerventilen und einen oder mehrere Druckregler enthält. Die pneumatische Schaltung 200 wird von der Steuereinrichtung 120 durch Steuersignale der Gerätesteuerung gesteuert, welche von der Steuereinrichtung 120 an die pneumatische Schaltung 200 übertragen werden. Gemäß bevorzugter Ausführungsform der Erfindung ist die Gerätesteuerung derart ausgebildet, dass sie erkennt, welcher Sprühpistolentyp an der Steuereinrichtung bzw. an der Pulverabgabevorrichtung 1 angeschlossen ist. Vorzugsweise werden dann automatisch vorab festgelegte Programme, die einstellbare Parameter enthalten können, aufgerufen, wobei es sich bei diesen Programmen um an den Sprühpistolentyp angepasste Beschichtungsprogramme handelt.

Die Steuereinrichtung 120 dient ferner zur Steuerung des Betriebes der Pulverabgabevorrichtung 1. Hierzu ist die Steuereinrichtung 120 ist ausgebildet, die einzelnen ansteuerbaren Komponenten der Pulverabgabevorrichtung 1, insbesondere die Steuerventile V1, V2, V3, V4 und V5, geeignet anzusteuern und deren Betätigung zu koordinieren.

Die Steuereinrichtung 120 ist vorzugsweise derart ausgebildet, dass diese zur Vorbereitung der Saugphase der Pulverförderkammer 4 das Steuerventil V4 öffnet, so dass die in dem Druckspeicher 57 bzw. von der Druckluftquelle 58 bereitgestellte Druckluft über die Druckluftversorgungsleitung 56 und der Luftaustauschöffnung 16 in die Druckkammer des als Quetschventil ausgebildeten Pulverauslassventils 8 geleitet wird. Als Folge hiervon wird der flexible elastische Schlauch des als Quetschventil ausgebildeten Pulverauslassventils 8 zusammengequetscht, infolgedessen der von dem flexiblen elastischen Schlauch bereitgestellte Pulverweg durch das Pulverauslassventil 8 geschlossen wird.

Mit dem Schließen des Pulverauslassventils 8 wird mit Hilfe der Steuereinrichtung 120 die in dem Gehäuse 12 der Pulverförderkammer 4 vorgesehene Luftaustauschöffnung 13 strömungsmäßig mit der Vakuumquelle 52 verbunden, um im Inneren der Pulverförderkammer 4 einen Unterdruck zu erzeugen, so dass Beschichtungspulver über den Pulvereinlass 2 der Pulverabgabevorrichtung 1 und das (geöffnete) Pulvereinlassventil 7 sowie den Pulvereinlass 5 der Pulverförderkammer 4 in die Pulverförderkammer 4 eingesaugt werden kann.

Gemäß bevorzugter Ausführungsformen der Erfindung wird zum Initiieren der Saugphase der Pulverabgabevorrichtung 1 von der Steuereinrichtung 120 ein Steuersignal zum Erzeugen des Unterdruckes in der Pulverförderkammer 4 frühestens gleichzeitig wie, oder vorzugsweise um eine vorbestimmte Verzögerungszeit später als ein Steuersignal zum Öffnen des Pulvereinlassventils 7 erzeugt, so dass der Aufbau des Unterdruckes in der Pulverförderkammer 4 frühestens gleichzeitig mit dem Öffnen des Pulvereinlassventils 7 beginnt, vorzugsweise um die genannte vorbestimmte Verzögerungszeit später als das Öffnen des Pulvereinlassventils 7. Die vorbestimmte Verzögerungszeit liegt vorzugsweise im Bereich zwischen 0 ms und 50 ms bei einem Förderzyklus der Pulverförderkammer 4 von ungefähr 200 ms.

Dadurch wird erreicht, dass der Unterdruck in der Pulverförderkammer 4 einer Öffnungsbewegung des Pulvereinlassventils 7, insbesondere wenn dieses ein Quetschventil ist, mindestens zum Zeitpunkt des Beginns der Öffnungsbewegung des Pulvereinlassventils 7, weniger stark entgegenwirkt als beim Stand der Technik, wo in der Regel bereits vor dem Öffnen des Pulvereinlassventils in der entsprechenden Pulverförderkammer eine Druckabsenkung stattfindet.

Anschließend wird das Steuerventil V3 strömungsmäßig mit der Druckluftversorgungsleitung 56 verbunden, infolgedessen ein Überdruck in der Druckkammer des als Quetschventil ausgebildeten Pulvereinlassventils 7 angelegt wird, der ein Zusammenquetschen des flexiblen elastischen Schlauches des als Quetschventil ausgebildeten Pulvereinlassventils 7 bewirkt. Auf diese Weise wird das Pulvereinlassventil 7 geschlossen. Das Steuerventil V4 schaltet die Luftaustauschöffnung 17 der Druckkammer des als Quetschventil ausgebildeten Pulverauslassventils 8 drucklos bzw. entlüftet die Druckkammer 15.2. Aufgrund der Elastizität des Schlauches des als Quetschventil ausgebildeten Pulverauslassventils 8 geht dieses dann unmittelbar in seinen geöffneten Zustand über.

In diesem Augenblick oder unmittelbar danach wird mit Hilfe der Steuereinrichtung 120 das Steuerventil V1 derart geschaltet, dass die in dem Gehäuse 12 der Pulverförderkammer 4 ausgebildete Luftaustauschöffnung 13 strömungsmäßig mit der Druckluftquelle 58 verbunden wird. Die Druckluft strömt dann über die Druckluftversorgungsleitung 50, das Steuerventil V1, die Zwischenkammer 11 und das Filterelement 10 in die Pulverförderkammer 4 und treibt die zuvor eingesaugte Pulverportion aus den Pulverauslass 6 der Pulverförderkammer 4 aus.

Mit Hilfe der über die Druckluftversorgungsleitung 50 in die Pulverförderkammer 4 eingespeisten Transportdruckluft wird die Pulverportion weiter durch das geöffnete Pulverauslassventil 8, den Filterrohrkanal 18 der Zusatzdruckluft-Einlassvorrichtung 9 und den Pulverauslass 3 der Pulverabgabevorrichtung 1 transportiert.

Die Steuereinrichtung 120 ist insbesondere ausgelegt, um über die Zusatzdruckluft-Einlassvorrichtung 9 pulsweise Zusatz-Transportdruckluft in den Pulverweg zwischen dem Pulverauslassventil 8 und dem Pulverauslass 3 der Pulverabgabevorrichtung 1 einzuspeisen. Hierbei hat es sich als Vorteil erwiesen, wenn die über die Zusatzdruckluft-Einlassvorrichtung 9 pulsweise in den Pulverweg eingespeiste Zusatz-Transportdruckluft immer während der gesamten oder während einer vorbestimmten oder vorbestimmbaren Teilperiode der Saugphase der Pulverförderkammer 4 eingespeist wird, um auf diese Weise wirksam Pulsationen in dem von der Pulverabgabevorrichtung 1 abgegebenen Pulverstrom zu vermeiden bzw. zu minimieren.

Im Einzelnen ist zu diesem Zweck die Steuereinrichtung 120 ausgeführt, die Luftaustauschöffnung 21 der Druckluftkammer 19 der Zusatzdruckluft-Einlassvorrichtung 9 immer dann mit der Druckluftquelle 58 strömungsmäßig zu verbinden, wenn das Pulverauslassventil 8 geschlossen ist.

Bei der in den FIG. 1 und FIG. 2 gezeigten Ausführungsformen ist die Steuereinrichtung 120 außerdem mit einem Schnittstellenanschluss versehen, mittels welchem ein Kommunikationsbus 131 der Steuereinrichtung 120 nach außen geführt wird. Hierdurch ist eine wahlweise extern gesteuerter Betrieb (Automatikbetrieb) der Steuereinrichtung 120 möglich; in den dargestellten Ausführungsformen kommt hierfür eine externe Steuerung zum Einsatz, welche eine Fernsteuerung 140 und eine abgesetzte Verarbeitungseinheit 141 aufweist.

Steuerungs- und Anweisungssignale sowie Parametersignale werden über den Kommunikationsbus 131 von der Fernsteuerung 140 an die Steuereinrichtung 120 bzw. von der Steuereinrichtung 120 an die abgesetzte Verarbeitungseinheit 141 ausgegeben und in der externen Steuerung verarbeitet, um wahlweise einen Automatikbetrieb zu ermöglichen. Um einen robusten und störungssicheren Betrieb mit einfacher Einbindungsmöglichkeit in vorhandene Automatisierungssysteme zu ermöglichen, ist der Kommunikationsbus 131 als Feldbus, insbesondere als CAN-Bus oder Profibus ausgebildet.

Bei der in FIG. 2 dargestellten Ausführungsformen der erfindungsgemäßen Pulverbeschichtungsanlage 100 sind die einzelnen Druckluftversorgungsleitungen 50, 54, 56 und 59 in dem Gehäuse der Pulverabgabevorrichtung aufgenommen, in welchem die Druckluftversorgung der einzelnen Komponenten der Pulverabgabevorrichtung 1 und der Pulversprühvorrichtung 102 koordiniert und gesteuert wird. Insbesondere kann über die ebenfalls in dem Gehäuse der Pulverabgabevorrichtung 1 integrierte Steuereinrichtung 120 auch die pro Zeiteinheit der Pulversprühvorrichtung 102 über den Druckluft-Eingang der Pulversprühvorrichtung 102 zugeführte Menge an Zusatzdruckluft, welche zur Zerstäubung, zur Formung und/oder zur anderweitigen Beeinflussung des von der Pulversprühvorrichtung 102 zu versprühenden Beschichtungspulvers dient, und/oder die pro Zeiteinheit der Pulversprühvorrichtung 102 über den Druckluft-Eingang der Pulversprühvorrichtung 102 zugeführte Menge an Elektrodenspülluft eingestellt werden.

Die Erfindung ist nicht auf die in den Zeichnungen dargestellten Ausführungsbeispiele beschränkt, sondern ergibt sich aus den Merkmalen des Anspruchs 1.

## Patentansprüche

1. Pulverabgabevorrichtung (1) in Gestalt einer Pulverdichtstrompumpe oder eines Pulverinjektors zum Fördern von Beschichtungspulver von einem Pulverreservoir (101) zu einer Pulversprühvorrichtung (102), wobei die Pulverabgabevorrichtung (1) eine in der Pulverabgabevorrichtung (1) integrierte Steuereinrichtung (120) aufweist, welche ausgebildet ist zum Einstellen mindestens eines Parameters, der im Hinblick auf einen mit der Pulversprühvorrichtung (102) bewirkten Sprühbeschichtungsvorgang charakterisierend ist,
**dadurch gekennzeichnet, dass**
die Steuereinrichtung (120) ferner ausgebildet ist zur Durchführung von Sprühbeschichtungsverfahren, wobei die Steuereinrichtung (120) hierzu eine Speichereinrichtung mit einer Vielzahl von Sprühbeschichtungsprogrammen aufweist, wobei jedes Sprühbeschichtungsprogramm jeweils mindestens einen einstellbaren Parameter enthält, wobei die Steuereinrichtung (120) mindestens ein manuell betätigbares Parameter-Einstellelement (1°, 2°, 3°, 4°, 5°, 6°) aufweist zum Einstellen eines Parameter-Sollwertes des mindestens einen einstellbaren Parameters, und wobei die Steuereinrichtung (120) eine optische Anzeigeeinheit (121) aufweist zum automatischen Anzeigen des mindestens einen eingestellten Parameter-Sollwertes.

2. Pulverabgabevorrichtung (1) nach Anspruch 1,
wobei die Steuereinrichtung (120) ausgebildet ist, mindestens einen der nachfolgend aufgeführten und im Hinblick auf einen mit der Pulversprühvorrichtung (102) bewirkten Sprühbeschichtungsvorgang charakterisierenden Parameter einzustellen:
- einen Elektrodensprühstrom von einer oder mehreren Hochspannungselektroden der Pulversprühvorrichtung (102);
- eine Hochspannung an einer oder mehreren Hochspannungselektroden der Pulversprühvorrichtung (102);
- eine pro Zeiteinheit der Pulversprühvorrichtung (102) zuzuführende Menge an Elektrodenspülluft;
- eine pro Zeiteinheit der Pulversprühvorrichtung (102) zuzuführende Menge an Formungsluft;
- eine pro Zeiteinheit der Pulversprühvorrichtung (102) zuzuführende Menge an Beschichtungspulver; und
- eine pro Zeiteinheit zusammen mit dem Beschichtungspulver der Pulversprühvorrichtung (102) zuzuführende Menge an Transportdruckluft.

3. Pulverabgabevorrichtung (1) nach Anspruch 1 oder 2,
wobei die Steuereinrichtung (120) mindestens ein manuell betätigbares Parameter-Einstellelement (1°, 2°, 3°, 4°, 5°, 6°) aufweist zum Einstellen eines Parameter-Sollwertes des mindestens einen Parameters, der im Hinblick auf einen mit der Pulversprühvorrichtung (102) bewirkten Sprühbeschichtungsvorgang charakterisierend ist, und wobei die optische Anzeigeeinheit (121) vorzugsweise ausgebildet ist zum automatischen Anzeigen des mindestens einen eingestellten Parameter-Sollwerts.

4. Pulverabgabevorrichtung (1) nach einem der Ansprüche 1 bis 3,
wobei die Steuereinrichtung (120) ferner ausgebildet ist zum Einstellen mindestens eines Parameters, der im Hinblick auf eine mit der Pulverabgabevorrichtung (1) bewirkte Pulverförderung charakterisierend ist.

5. Pulverabgabevorrichtung (1) nach Anspruch 4,
wobei die Steuereinrichtung (120) ausgebildet ist, mindestens einen der nachfolgend aufgeführten und im Hinblick auf eine mit der Pulverabgabevorrichtung (1) bewirkte Pulverförderung charakterisierenden Parameter einzustellen:
- eine pro Zeiteinheit von der Pulverabgabevorrichtung (1) zu fördernde Menge an Beschichtungspulver; und
- eine pro Zeiteinheit zusammen mit dem Beschichtungspulver zu fördernde Menge an Transportdruckluft.

6. Pulverabgabevorrichtung (1) nach Anspruch 4 oder 5,
wobei die Steuereinrichtung (120) mindestens ein manuell betätigbares Parameter-Einstellelement (1°, 2°, 3°, 4°, 5°, 6°) aufweist zum Einstellen eines Parameter-Sollwerts des mindestens einen Parameters, der im Hinblick auf eine mit der Pulverabgabevorrichtung (1) bewirkte Pulverförderung charakterisierend ist, und wobei die optische Anzeigeeinheit (121) vorzugsweise ausgebildet ist zum automatischen Anzeigen des mindestens einen eingestellten Parameter-Sollwertes.

7. Pulverabgabevorrichtung (1) nach einem der Ansprüche 1 bis 6,
wobei das Pulverreservoir (101) mit einer Fluidisiereinrichtung versehen ist, und wobei die Steuereinrichtung (120) ferner ausgebildet ist zum Einstellen einer pro Zeiteinheit der Fluidisiereinrichtung zuzuführende Menge an Fluidisierdruckluft.

8. Pulverabgabevorrichtung (1) nach Anspruch 7,
wobei die Steuereinrichtung (120) mindestens ein manuell betätigbares Einstellelement aufweist zum Einstellen eines Sollwertes der pro Zeiteinheit der Fluidisiereinrichtung zuzuführenden Menge an Fluidisierdruckluft.

9. Pulverabgabevorrichtung (1) nach einem der Ansprüche 1 bis 8,
wobei die Steuereinrichtung (120) ferner einen Schnittstellenanschluss (130) zum Herausführen eines Kommunikationsbusses (131) der Steuereinrichtung (120) aufweist, der zum Einstellen des mindestens einen Parameters mittels einer Fernsteuerung (140) und /oder zum Übermitteln des mindestens einen eingestellten Parameter-Sollwerts an eine abgesetzte Verarbeitungseinheit (141) ausgelegt ist.

10. Pulverabgabevorrichtung (1) nach Anspruch 9,
wobei der Schnittstellenanschluss (130) eine parallele oder serielle Schnittstelle aufweist, und/oder
wobei der Kommunikationsbus (131) als ein Feldbussystem, insbesondere als ein CAN-Bus-System oder ein Profibus-System ausgebildet ist.

11. Pulverabgabevorrichtung (1) nach einem der Ansprüche 1 bis 10, wobei die Pulverabgabevorrichtung (1) als Pulverdichtstrompumpe ausgeführt ist, die mindestens eine Förderkammer (4) mit einem Pulvereinlassventil (7) und einem Pulverauslassventil (8) aufweist, und wobei die Steuereinrichtung (120) ausgebildet ist, zur Erzeugung von Steuersignalen zum wiederholten Durchführen des folgenden Betriebszyklus a) bis d):
a) Erzeugen eines Unterdruckes in der Förderkammer (4) zum Einsaugen von Beschichtungspulver in die Förderkammer (4) durch das geöffnete Pulvereinlassventil (7), während das Pulverauslassventil (8) geschlossen ist;
b) Verschließen des Pulvereinlassventils (7) und Öffnen des Pulverauslassventils (8);
c) Einleiten von Druckgas in die Förderkammer (4) zum Abgeben des Beschichtungspulvers aus der Förderkammer (4) durch das offene Pulverauslassventil (8), während das Pulvereinlassventil (7) geschlossen ist;
d) Verschließen des Pulverauslassventils (8) und Öffnen des Pulvereinlassventils (7),
wobei die Steuereinrichtung (120) ferner derart ausgebildet ist, dass sie beim Zyklusschritt a) oder beim Wechsel von Zyklusschritt d) zum Zyklusschritt a) ein Steuersignal zum Erzeugen des Unterdruckes in der Förderkammer (4) erzeugt.

12. Pulverabgabevorrichtung (1) nach einem der Ansprüche 1 bis 11,
wobei die Steuereinrichtung (120) ferner ausgebildet ist zum Einstellen mindestens eines Parameters, der im Hinblick auf eine in einem Reinigungsbetrieb bewirkte Spülung mit Reinigungsdruckluft charakterisierend ist.

13. Pulverabgabevorrichtung (1) nach Anspruch 12,
wobei die Steuereinrichtung (120) ausgebildet ist, mindestens einen der nachfolgend aufgeführten und für eine in einem Reinigungsbetrieb bewirkte Spülung charakterisierenden Parameter einzustellen:
- eine pro Zeiteinheit der Pulverabgabevorrichtung (1) zuzuführende Menge an Spüldruckluft;
- eine pro Zeiteinheit der Pulversprühvorrichtung (102) zuzuführende Menge an Spülruckluft;
- eine Frequenz einer der Pulverabgabevorrichtung (1) zuzuführenden gepulsten Spüldruckluft; und
- eine Frequenz einer der Pulversprühvorrichtung (102) zuzuführenden gepulsten Spüldruckluft.

14. Pulverabgabevorrichtung (1) nach einem der Ansprüche 1 bis 13,
wobei die Steuereinrichtung (120) ferner eine Regeleinrichtung aufweist zur Regelung eines elektrischen Sprühstroms, welcher von einer Hochspannungselektrode der Pulversprühvorrichtung (102) mit dem von der Pulversprühvorrichtung (102) auf ein zu beschichtendes Objekt versprühtes Beschichtungspulver zu dem zu beschichtenden Objekt fließt, wobei die Steuereinrichtung (120) ferner eine Sprühstrommessschaltung aufweist zum automatischen Messen des Sprühstromes, und wobei die Steuereinrichtung (120) ausgelegt ist, einem Stromanstieg durch eine Spannungsreduzierung entgegenzuwirken, und wobei die Steuereinrichtung (120) ferner eine Strombegrenzung und eine Hochspannungsbegrenzung je auf einen vorbestimmten Wert aufweist.

15. Pulverbeschichtungsanlage (100) zum Pulversprühbeschichten von Gegenständen, wobei die Pulverbeschichtungsanlage (100) folgendes aufweist:
- eine Pulverabgabevorrichtung (1) nach einem der Ansprüche 1 bis 14; und
- mindestens eine mit der Pulverabgabevorrichtung (1) über eine Pulverzufuhrleitung (104) verbundene Pulversprühvorrichtung (102),
wobei alle im Hinblick auf die Funktionsweise der mindestens einen Pulversprühvorrichtung (102) einstellbaren Parameter über die Steuereinrichtung (120) der Pulverabgabevorrichtung (1) einstellbar sind.

## Claims

1. A powder-dispensing device (1) in the form of a dense phase powder pump or a powder injector for conveying coating powder from a powder reservoir (101) to a powder-spraying device (102), wherein the powder-dispensing device (1) comprises a control device (120) integrated into the powder-dispensing device (1) whch is designed to set at least one parameter characteristic with regard to a spray coating process effected with the powder-spraying device (102),
**characterized in that**
the control device (120) is further designed to perform spray coating processes, wherein the control device (120) comprises a storage device having a plurality of spray coating programs thereto, wherein each spray coating program has at least one respective adjustable parameter, wherein the control device (120) comprises at least one manually operable parameter adjusting element (1°, 2°, 3°, 4°, 5°, 6°) for setting a parameter target value for the at least one adjustable parameter, and wherein the control device (120) comprises a visual display unit (121) for automatically displaying the at least one set parameter target value.

2. The powder-dispensing device (1) according to claim 1,
wherein the control device (120) is designed to set at least one of the following specified parameters characteristic of a spray coating process effected with the powder-spraying device (102):
- an electrode spray current of one or more high-voltage electrodes of the powder-spraying device (102);
- a high voltage at one or more high-voltage electrodes of the powder-spraying device (102);
- a volume of electrode flushing air to be supplied to the powder-spraying device (102) per unit of time;
- a volume of shaping air to be supplied to the powder-spraying device (102) per unit of time;
- an amount of coating powder to be supplied to the powder-spraying device (102) per unit of time; and
- a volume of compressed transport air to be supplied to the powder-spraying device (102) together with the coating powder per unit of time.

3. The powder-dispensing device (1) according to claim 1 or 2,
wherein the control device (120) comprises at least one manually operable parameter adjusting element (1°, 2°, 3°, 4°, 5°, 6°) for setting a parameter target value for the at least one parameter which is characteristic with regard to a spray coating process effected with the powder-spraying device (102), and wherein the visual display unit (121) is preferably designed to automatically display the at least one set parameter target value.

4. The powder-dispensing device (1) according to one of claims 1 to 3,
wherein the control device (120) is further designed to set at least one parameter which is characteristic with regard to a powder conveyance effected with the powder-dispensing device (1).

5. The powder-dispensing device (1) according to claim 4,
wherein the control device (120) is designed to set at least one of the following specified parameters characteristic of a powder conveyance effected with the powder-dispensing device (1):
- an amount of coating powder to be conveyed by the powder-dispensing device (1) per unit of time; and
- a volume of compressed transport air to be conveyed along with the coating powder per unit of time.

6. The powder-dispensing device (1) according to claim 4 or 5,
wherein the control device (120) comprises at least one manually operable parameter adjusting element (1°, 2°, 3°, 4°, 5°, 6°) for setting a parameter target value for the at least one parameter which is characteristic with regard to the powder conveyance effected with the powder-dispensing device (1), and wherein the visual display unit (121) is preferably designed to automatically display the at least one set parameter target value.

7. The powder-dispensing device (1) according to one of claims 1 to 6,
wherein the powder reservoir (101) is provided with a fluidizing device, and wherein the control device (120) is further designed to set a volume of compressed fluidizing air to be supplied to the fluidizing device per unit of time.

8. The powder-dispensing device (1) according to claim 7,
wherein the control device (120) comprises at least one manually operable adjusting element for setting a target value for the volume of compressed fluidizing air to be supplied to the fluidizing device per unit of time.

9. The powder-dispensing device (1) according to one of claims 1 to 8,
wherein the control device (120) further comprises an interface connection (130) as a lead for a communication bus (131) of the control device (120) designed to set the at least one parameter via a remote control (140) and/or to communicate the at least one set parameter target value to a remote processing unit (141).

10. The powder-dispensing device (1) according to claim 9,
wherein the interface connection (130) comprises a parallel or serial interface, and/or
wherein the communication bus (131) is designed as a field bus system, in particular a CAN bus system or a Profibus system.

11. The powder-dispensing device (1) according to one of claims 1 to 10, wherein the powder-dispensing device (1) is realized as a dense phase powder pump having at least one feed chamber (4) comprising a powder inlet valve (7) and a powder outlet valve (8), and wherein the control device (120) is designed to generate control signals in order to repeatedly implement the following a) to d) operating cycle:
a) generating a negative pressure in the feed chamber (4) to draw coating powder into the feed chamber (4) through the open powder inlet valve (7) while the powder outlet valve (8) is closed;
b) closing the powder inlet valve (7) and opening the powder outlet valve (8);
c) introducing compressed gas into the feed chamber (4) to dispense the coating powder out of the feed chamber (4) through the open powder outlet valve (8) while the powder inlet valve (7) is closed; and
d) closing the powder outlet valve (8) and opening the powder inlet valve (7),
wherein the control device (120) is further designed to generate a control signal at cycle step a) or when switching from cycle step d) to cycle step a) in order to generate the negative pressure in the feed chamber (4).

12. The powder-dispensing device (1) according to one of claims 1 to 11,
wherein the control device (120) is further designed to set at least one parameter which is characteristic with regard to a flushing effected with compressed cleaning air in a cleaning operation.

13. The powder-dispensing device (1) according to claim 12,
wherein the control device (120) is designed to set at least one of the following specified parameters characteristic of a flushing effected in a cleaning operation:
- a volume of compressed flushing air to be supplied to the powder-dispensing device (1) per unit of time;
- a volume of compressed flushing air to be supplied to the powder-spraying device (102) per unit of time;
- a frequency of pulsed compressed flushing air to be supplied to the powder-dispensing device (1); and
- a frequency of pulsed compressed flushing air to be supplied to the powder-spraying device (102).

14. The powder-dispensing device (1) according to one of claims 1 to 13,
wherein the control device (120) further comprises a regulating device for regulating an electric spray current flowing from a high-voltage electrode of the powder-spraying device (102) along with the coating powder to be sprayed onto an object to be coated by the powder-spraying device (102) to said object to be coasted, wherein the control device (120) further comprises a spray current measuring circuit for automatically measuring the spray current, and wherein the control device (120) is designed to counter an increase in current by a decrease in voltage, and wherein the control device (120) further comprises a current limiter and a high-voltage limiter each at a preset value.

15. A powder-coating system (100) for spraying objects with a powder coating,
wherein the powder-coating system (100) comprises the following:
- a powder-dispensing device (1) according to one of claims 1 to 14; and
- at least one powder-spraying device (102) connected to the powder-dispensing device (1) via a powder supply line (104),
wherein all of the parameters able to be set with respect to the operation of the at least one powder-spraying device (102) can be set by means of the control device (120) of the powder-dispensing device (1).

## Revendications

1. Dispositif de distribution de poudre (1) sous la forme d'une pompe à poudre en phase dense ou d'un injecteur de poudre pour convoyer de la poudre de revêtement depuis un réservoir de poudre (101) jusqu'à un dispositif de pulvérisation de poudre (102), dans lequel le dispositif de distribution de poudre (1) comprend un système de commande (120) intégré dans le dispositif de distribution de poudre (1), qui est réalisé pour régler au moins un paramètre qui est caractéristique à l'égard d'un processus de revêtement par pulvérisation réalisé au moyen du dispositif de pulvérisation de poudre (102),
**caractérisé en ce que**
le système de commande (120) est en outre réalisé pour mettre en œuvre un procédé de revêtement par pulvérisation, le système de commande (120) comprenant à cet effet un dispositif à mémoire avec une pluralité de programmes de revêtement par pulvérisation, dans lesquels chaque programme de revêtement par pulvérisation contient au moins un paramètre réglable, et le système de commande (120) comprend au moins un élément de réglage de paramètre susceptible d'être actionné manuellement (1°, 2°, 3°, 4°, 5°, 6°) pour régler une valeur de consigne dudit au moins un paramètre réglable, et le système de commande (120) comprend une unité d'affichage optique (121) pour l'affichage automatique de ladite au moins une valeur de consigne de paramètre réglée.

2. Dispositif de distribution de poudre (1) selon la revendication 1,
dans lequel le système de commande (120) est réalisé pour régler l'un au moins des paramètres présentés ci-après et caractéristiques à l'égard d'un processus de revêtement par pulvérisation réalisé au moyen du dispositif de pulvérisation de poudre (102) :
- un courant de pulvérisation d'électrodes d'une ou de plusieurs électrodes à haute tension du dispositif de pulvérisation de poudre (102) ;
- une haute tension au niveau d'une ou plusieurs électrodes à haute tension du dispositif de pulvérisation de poudre (102) ;
- une quantité d'air de rinçage d'électrode à amener au dispositif de pulvérisation de poudre (102) par unité de temps ;
- une quantité d'air de mise en forme à amener au dispositif de pulvérisation de poudre (102) par unité de temps ;
- une quantité de poudre de revêtement à amener au dispositif de pulvérisation de poudre (102) par unité de temps ; et
- une quantité d'air sous pression de transport à amener au dispositif de pulvérisation de poudre (102) par unité de temps conjointement avec la poudre de revêtement.

3. Dispositif de distribution de poudre (1) selon la revendication 1 ou 2,
dans lequel le système de commande (120) comprend au moins un élément de réglage de paramètre susceptible d'être actionné manuellement (1°, 2°, 3°, 4°, 5°, 6°) pour régler une valeur de consigne dudit au moins un paramètre, qui est caractéristique à l'égard d'un processus de revêtement par pulvérisation réalisé au moyen du dispositif de pulvérisation de poudre (102), et dans lequel l'unité d'affichage optique (121) est de préférence réalisée pour afficher automatiquement ladite au moins une valeur de consigne de paramètre réglée.

4. Dispositif de distribution de poudre (1) selon l'une des revendications 1 à 3,
dans lequel le système de commande (120) est en outre réalisé pour régler au moins un paramètre qui est caractéristique à l'égard d'un convoyage de poudre réalisé au moyen du dispositif de distribution de poudre (1).

5. Dispositif de distribution de poudre (1) selon la revendication 4,
dans lequel le système de commande (120) est réalisé pour régler au moins l'un des paramètres présentés ci-après et caractéristiques à l'égard d'un convoyage de poudre effectué au moyen du dispositif de distribution de poudre (1) :
- une quantité de poudre de revêtement à convoyer par le dispositif de distribution de poudre (1) par unité de temps ; et
- une quantité d'air comprimé de transport à convoyer par unité de temps conjointement avec la poudre de revêtement.

6. Dispositif de distribution de poudre (1) selon la revendication 4 ou 5,
dans lequel le système de commande (120) comprend au moins un élément de réglage de paramètre à actionner manuellement (1°, 2°, 3°, 4°, 5°, 6°) pour régler une valeur de consigne dudit au moins un paramètre, qui est caractéristique à l'égard d'un convoyage de poudre réalisé au moyen du dispositif de distribution de poudre (1), et dans lequel l'unité d'affichage optique (121) est de préférence réalisée pour afficher automatiquement ladite au moins une valeur de consigne de paramètre réglée.

7. Dispositif de distribution de poudre (1) selon l'une des revendications 1 à 6,
dans lequel le réservoir de poudre (101) est doté d'un système de fluidification, et dans lequel le système de commande (120) est en outre réalisé pour régler une quantité d'air comprimé de fluidification à amener au système de fluidification par unité de temps.

8. Dispositif de distribution de poudre (1) selon la revendication 7,
dans lequel le système de commande (120) comprend au moins un élément de réglage à actionner manuellement pour régler une valeur de consigne de la quantité d'air comprimé de fluidification à amener par unité de temps au système de fluidification.

9. Dispositif de distribution de poudre (1) selon l'une des revendications 1 à 8,
dans lequel le système de commande (120) comprend en outre une connexion interface (130) pour faire sortir un bus de communication (131) du système de commande (120), qui est conçu pour régler ledit au moins un paramètre au moyen d'une télécommande (140) et/ou pour transmettre ladite au moins une valeur de consigne de paramètre réglé à une unité de traitement séparée (141).

10. Dispositif de distribution de poudre (1) selon la revendication 9,
dans lequel la connexion interface (130) comprend une interface parallèle ou une interface série, et/ou
dans lequel le bus de communication (131) est un système à bus de champ, en particulier un système à bus CAN ou un système à bus de type "Profibus".

11. Dispositif de distribution de poudre (1) selon l'une des revendications 1 à 10,
dans lequel le dispositif de distribution de poudre (1) est réalisé sous la forme d'une pompe à poudre en phase dense, qui comprend au moins une chambre de convoyage (4) avec une vanne d'entrée de poudre (7) et une vanne de sortie de poudre (8), et dans lequel le système de commande (120) est réalisé pour générer des signaux de commande pour mettre en œuvre de façon répétée le cycle de fonctionnement suivant a) à d) :
a) génération d'une dépression dans la chambre de convoyage (4) pour aspirer de la poudre de revêtement jusque dans la chambre de convoyage (4) à travers la vanne d'entrée de poudre (7) ouverte, pendant que la vanne de sortie de poudre (8) est fermée ;
b) fermeture de la vanne d'entrée de poudre (7) et ouverture de la vanne de sortie de poudre (8) ;
c) introduction de gaz sous pression jusque dans la chambre de convoyage (4) pour distribuer la poudre de revêtement hors de la chambre de convoyage (4) à travers la vanne de sortie de poudre (8) ouverte, alors que la vanne d'entrée de poudre (7) est fermée ;
d) fermeture de la vanne de sortie de poudre (8) et ouverture de la vanne d'entrée de poudre (7),
dans lequel le système de commande (120) est en outre réalisé de telle façon que, lors de l'étape a) du cycle ou lors du passage de l'étape d) du cycle à l'étape a) du cycle, il engendre un signal de commande pour engendrer la dépression dans la chambre de convoyage (4).

12. Dispositif de distribution de poudre (1) selon l'une des revendications 1 à 11,
dans lequel le système de commande (120) est en outre réalisé pour régler au moins un paramètre, qui est caractéristique à l'égard d'un rinçage avec de l'air comprimé de nettoyage, réalisé dans un service de nettoyage.

13. Dispositif de distribution de poudre (1) selon la revendication 12,
dans lequel le système de commande (120) est réalisé pour régler l'un au moins des paramètres présentés ci-après et caractéristiques pour un rinçage réalisé dans un service de nettoyage :
- une quantité d'air comprimé de rinçage à admettre par unité de temps au dispositif de distribution de poudre (1) ;
- une quantité d'air comprimé de rinçage à admettre par unité de temps au dispositif de pulvérisation de poudre (102) ;
- une fréquence de l'air comprimé de rinçage pulsé à admettre au dispositif de distribution de poudre (1) ; et
- une fréquence de l'air comprimé de rinçage pulsé à admettre au dispositif de pulvérisation de poudre (102).

14. Dispositif de distribution de poudre (1) selon l'une des revendications 1 à 13,
dans lequel le système de commande (120) comprend en outre un moyen de régulation pour réguler le courant électrique de pulvérisation, qui s'écoule depuis une électrode à haute tension du dispositif de pulvérisation de poudre (102) jusqu'à un objet à revêtir conjointement avec la poudre de revêtement pulvérisé par le dispositif de pulvérisation de poudre (102) vers l'objet à revêtir, dans lequel le système de commande (120) comprend en outre un circuit de mesure de courant de pulvérisation pour mesurer automatiquement le courant de pulvérisation, et dans lequel le système de commande (120) est conçu pour s'opposer à une montée du courant en raison d'une réduction de la tension, et dans lequel le système de commande (120) comprend en outre une limitation du courant et une limitation de la haute tension respectivement à une valeur prédéterminée.

15. Installation de revêtement de poudre (100) pour le revêtement par pulvérisation de poudre sur des objets, dans laquelle l'installation de revêtement de poudre (100) comprend les éléments suivants :
- un dispositif de distribution de poudre (1) selon l'une des revendications 1 à 14 ; et
- au moins un dispositif de pulvérisation de poudre (102) relié au dispositif de distribution de poudre (1) via une conduite d'alimentation de poudre (104), dans laquelle tous les paramètres réglables à l'égard du mode de fonctionnement dudit au moins un dispositif de pulvérisation de poudre sont réglables via le système de commande (120) du dispositif de distribution de poudre (1).
